# EUROPÄISCHE PATENTSCHRIFT

(11) **EP 2 778 472 B1**
(45) Veröffentlichungstag und Bekanntmachung des Hinweises auf die Patenterteilung: **21.08.2024**
(21) Anmeldenummer: 14000910.1
(22) Anmeldetag: 13.03.2014
(51) Int. Cl.: F16H 7/12

(54) **Feder, Riemenspannvorrichtung und Aggregatanordnung**
Spring, belt tensioner and machine assembly
Ressort, dispositif de tension de courroie et système d'agrégat

(30) Priorität: 13.03.2013 DE 102013102562
(43) Veröffentlichungstag der Anmeldung: 17.09.2014
(73) Patentinhaber: Muhr und Bender KG, 57439 Attendorn (DE)
(72) Erfinder: Zacker, Matthias, D-57439 Attendorn (DE); Pfeifer, Simon, D-58840 Plettenberg (DE); Jud, Joachim, D-57567 Daaden (DE); Jung, Manfred, D-56457 Westerburg (DE)
(74) Vertreter: Neumann Müller Oberwalleney Patentanwälte PartG mbB

(56) Entgegenhaltungen:
- EP-A2- 2 128 489
- EP-A2- 2 557 295
- DE-A1- 102005 039 719
- US-A- 4 758 208
- US-A1- 2011 266 730

## Beschreibung

Die Erfindung betrifft eine Riemenspannvorrichtung für einen Riementrieb, der einen endlosen Riemen und zumindest zwei Riemenscheiben umfasst, von denen eine als Antrieb und eine als Abtrieb des Riementriebs fungieren kann. Derartige Riementriebe kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Bei herkömmlichen Riementrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Riemens benachbarten Aggregat, in der Regel der Generator, das Lostrum ausgebildet. Um hier eine ausreichende Umschlingung des Riemens um die Riemenscheibe zu gewährleisten, wird der Riemen mittels einer Spannrolle der Riemenspannvorrichtung vorgespannt.

Es sind auch Riementriebe bekannt, bei denen als weiteres Nebenaggregat ein Startergenerator in den Riementrieb integriert ist, das heißt ein Elektromotor, der je nach Betriebszustand als Starter (Anlasser) oder Lichtmaschine (Generator) betrieben werden kann. Im Normal- oder Motorbetrieb ist die Riemenscheibe an der Kurbelwelle die treibende Scheibe, während der Startergenerator wie auch die übrigen Aggregate angetrieben werden. Im Start- oder Anlasserbetrieb treibt der Startergenerator über die zugehörige Riemenscheibe die Kurbelwelle an, um den Verbrennungsmotor zu starten. Bei solchen Riementrieben mit Startergenerator als Nebenaggregat, findet zwischen Motorbetrieb einerseits und Anlasserbetrieb andererseits ein Wechsel zwischen Zugtrum und Lostrum zu beiden Seiten der Riemenscheibe des Startergenerators statt. Es ist demnach erforderlich, federbelastete Spannrollen für beide der genannten Trums vorzusehen, von denen jeweils eine am Lostrum unter Federkraft wirksam wird, während die andere vom gespannten Zugtrum zurückgedrängt wird.

Aus der EP 2 557 295 A2 ist eine Spannvorrichtung für einen Riementrieb bekannt. Die Spannvorrichtung umfasst ein Spannergehäuse, das mittels einer Gleitlagerung um die Achse eines Antriebsrads verschwenkbar auf dem Maschinengehäuse gelagert ist, eine Schraubenfeder, die in dem Spannergehäuse aufgenommen ist, und einen in dem Spannergehäuse gegen die Kraft der Schraubenfeder beweglich gelagerten Spannarm. Das Spannergehäuse weist ein ringförmiges Spannergehäuseteil und ein ringsegmentartiges Spannergehäuseteil auf, die gemeinsam einen im Querschnitt rechteckigen Aufnahmeraum für die Schraubenfeder und den Spannerarm bilden. Das zweite Gehäuseteil und der davon gebildete Aufnahmeraum erstrecken sich in Umfangsrichtung über etwa 180°.

Aus der DE 10 2005 039 719 A1 ist ein Spannsystem für ein Zugmitteltrieb mit einem in dem Zugmittel integrierten Startergenerator bekannt. Das Spannsystem umfasst zwei Spanneinrichtungen, die für eine simultane gleichgerichtete Bewegung über ein Spannelement miteinander bewegungsgekoppelt sind. Jede der Spanneinrichtungen weist einen Hebel auf, der über eine in einer rohrförmigen Aufnahme angeordnete Schraubenfeder vorgespannt ist. Die rohrförmigen Aufnahmen sind seitlich benachbart zum Gehäuse angeordnet.

Aus der gattungsgemäßen EP 2 128 489 A2 ist eine Riemenspannvorrichtung für einen Riementrieb mit Starter-Generator bekannt. Die Riemenspannvorrichtung weist ein Gehäuse auf, in dem zwei Spannarme um eine gemeinsame Schwenkachse schwenkbar gelagert sind. Die Spannarme sind mit Federmitteln gegeneinander abgestützt. Das Gehäuse ist bei an den Starter-Generator montierter Antriebsriemenscheibe dadurch montierbar, dass das Gehäuse in einem die Antriebswelle des Starter-Generators umgebenden Ringbereich berührungsfrei gegenüber dem StarterGenerator ist.

Aus der US 4 758 208 B ist eine Riemenspannvorrichtung für einen StarterGenerator bekannt. Das Gehäuse des Starter-Generators ist über einen Träger am Motorblock des Kraftfahrzeugs befestigt. Die Riemenspannanordnung umfasst zwei Spannarme, die scherenartig relativ zueinander um die Antriebswelle schwenkbar sind. Die Spannarme haben jeweils einen Hülsenabschnitt, der auf einer Gehäuselagerfläche des Starter-Generators schwenkbar gelagert sind. Um das Gehäuse des Starter-Generators ist eine Spannfeder mit mehr als drei Windungen angeordnet, welche die beiden Spannarme aufeinander zu beaufschlagt.

Aus der DE 10 2011 053 869 A1 ist eine Riemenspannvorrichtung mit genau einem Spannarm bekannt, der über eine Schraubenfeder gegenüber dem Grundkörper in Umfangsrichtung abgestützt ist.

Aus der US 2011/0 266 730 A1 ist eine Feder für eine Sperrvorrichtung eines Kraftfahrzeugsitzes bekannt, die in einem Umfangsabschnitt drei Windungen aufweist.

Die Bauraumverfügbarkeit um die Generatorachse sowie vor und hinter der Riemenebene ist insbesondere für zwei Spannvorrichtungen oder Doppelarmspanner begrenzt. Außerdem ist das Auflegen des Riemens, nicht zuletzt aufgrund der Bauraumverhältnisse, schwierig. Je nach Ausgestaltung des Riemenspanners können sich hohe Drehmomente auf den Riemenspanner wirkende Drehmomente ergeben, welche zu einem erhöhten Verschleiß führen können.

Der vorliegenden Erfindung liegt die Aufgabe zugrunde, eine Riemenspannvorrichtung für einen Riementrieb vorzuschlagen, die kompakt baut, einfach montierbar ist und mit der ein günstiger Kraftfluss zwischen Riemen und den wirksamen Teilen des Riemenspanners ermöglicht wird. Weiter soll eine Aggregatanordnung mit einer solchen Riemenspannvorrichtung vorgeschlagen werden, die einen kompakten Aufbau hat, einfach montierbar ist und mit der im Übrigen die obengenannten Nachteile vermieden werden können.

Eine Lösung besteht in der Verwendung einer Feder in einer Riemenspannvorrichtung, mit einer Anzahl von mindestens 1,25 und maximal 2,5 Windungen, die sich um eine Federachse herum erstrecken, wobei ein erstes Windungsende gegenüber einem hierzu um 360° um die Federachse versetzt angeordneten Windungsbereich einen axialen Versatz aufweist, und wobei ein zweites Windungsende gegenüber einem hierzu um 360° um die Federachse versetzt angeordneten Windungsbereich einen radialen Versatz aufweist. Mit Windungsende sind in diesem Zusammenhang die Enden der sich um die Federachse mit konkaver Krümmung erstreckenden Windungen gemeint. An das erste und/oder zweite Windungsende kann sich jeweils noch ein Endabschnitt anschließen, der beispielsweise nach radial außen oder in axiale Richtung abgebogen sein kann. Mit um 360° versetzter Bereich ist jeweils ein Bereich der Feder gemeint, der in Umfangsrichtung genau eine Windung weiter vom jeweiligen Ende liegt. Dabei wird der ausgehend vom ersten Windungsende um eine Windung entlang dem Umfang versetzt angeordnete Bereich auch als erster Windungsbereich, und der ausgehend vom zweiten Windungsende um eine Windung entlang dem Umfang versetzt angeordnete Bereich auch als zweiter Windungsbereich bezeichnet.

Eine Feder für eine erfindungsgemäße Riemenspannvorrichtung hat eine Anzahl von mindestens 1,25 und maximal 2,5 Windungen, die sich um eine Federachse herum erstrecken. Ein erstes Windungsende kann gegenüber einem hierzu um 360° um die Federachse versetzt angeordneten Windungsbereich einen axialen Versatz aufweisen, und ein zweites Windungsende kann gegenüber einem hierzu um 360° um die Federachse versetzt angeordneten Windungsbereich einen radialen Versatzaufweisen. Mit Windungsende sind in diesem Zusammenhang die Enden der sich um die Federachse mit konkaver Krümmung erstreckenden Windungen gemeint. An das erste und/oder zweite Windungsende kann sich jeweils noch ein Endabschnitt anschließen, der beispielsweise nach radial außen oder in axiale Richtung abgebogen sein kann. Mit um 360° versetzter Bereich ist jeweils ein Bereich der Feder gemeint, der in Umfangsrichtung genau eine Windung weiter vom jeweiligen Ende liegt. Dabei wird der ausgehend vom ersten Windungsende um eine Windung entlang dem Umfang versetzt angeordnete Bereich auch als erster Windungsbereich, und der ausgehend vom zweiten Windungsende um eine Windung entlang dem Umfang versetzt angeordnete Bereich auch als zweiter Windungsbereich bezeichnet.

Ein Vorteil besteht darin, dass die Feder insgesamt einen besonders flachen Aufbau hat, so dass auch eine mit der Feder ausgestattete Baueinheit kompakt gestaltet werden kann. Die Feder weist in dem Umfangsabschnitt, in dem das zweite Windungsende liegt, eine minimale axiale Bauhöhe auf, die im Extremfall nur dem größten Drahtdurchmesser des Federdrahts entspricht. Auf diese Weise steht in diesem Umfangsabschnitt Platz für andere Bauteile wie eine Spannrolle zur Verfügung. Gleichzeitig hat die Feder durch die Umfangserstreckung von 1,25 bis 2,5 Windungen, das heißt 450° bis 900° Winkelerstreckung um die Federachse, die gewünschten Federeigenschaften.

Nach einer bevorzugten Ausgestaltung hat das erste Windungsende gegenüber dem hierzu um 360° um die Federachse versetzten Windungsbereich (erster Windungsbereich) einen axialen Abstand (Va), der kleiner ist als ein dreifacher Durchmesser (d) des Federdrahts (Va < 3×d), insbesondere kleiner als der zweifache Federdrahtdurchmesser (Va < 2×d), gegebenenfalls sogar kleiner als der einfache Federdrahtdurchmesser (Va < d),. Alternativ oder in Ergänzung hierzu kann das zweite Windungsende gegenüber dem hierzu um 360° um die Federachse versetzten Windungsbereich (zweiter Windungsbereich) einen radialen Abstand (Vr) aufweist, der kleiner ist als ein dreifacher Durchmesser (d) des Federdrahts (Vr < 3xd), insbesondere kleiner als der zweifache Federdrahtdurchmesser (Vr < 2×d), gegebenenfalls sogar kleiner der einfache Federdrahtdurchmesser (Vr < d). Das erste Windungsende kann gegenüber dem ersten Windungsbereich eine radiale Überdeckung aufweisen, wodurch sich in diesem Umfangsabschnitt ein radial kompakter Aufbau ergibt. Alternativ oder in Ergänzung hierzu kann das zweite Windungsende gegenüber dem zweiten Windungsbereich eine axiale Überdeckung aufweisen, wodurch sich in diesem Umfangsabschnitt eine geringe axiale Baugröße ergibt. Die beiden Windungsenden der Feder sind vorzugsweise um 180° ± 30° in Umfangsrichtung relativ zueinander versetzt, das heißt um jeden beliebigen Wert zwischen 150° und 210° relativ zueinander, wobei andere Werte nicht ausgeschlossen sind.

Nach einer bevorzugten Ausgestaltung liegt ein sich vom ersten Windungsende aus in Richtung erstem Windungsbereich erstreckender erster Windungsabschnitt in einer ersten Ebene. Hiermit ist insbesondere gemeint, dass eine Federmittellinie des ersten Windungsabschnitts in einer Ebene liegt, wobei unter Berücksichtigung von Fertigungstoleranzen auch ein gewisser Versatz der Federmittellinie von der Ebene von bis zu ± 5 % in Bezug auf den Federdrahtdurchmesser mit umfasst sein soll. Alternativ oder in Ergänzung kann ein sich vom zweiten Windungsende aus in Richtung zweitem Windungsbereich erstreckender zweiter Windungsabschnitt in einer zweiten Ebene liegen. Hier gilt die obengenannte Definition für "in einer Ebene" entsprechend. Die beiden Ebenen sind vorzugsweise parallel zueinander angeordnet und verlaufen jeweils zumindest im Wesentlichen senkrecht zur Federachse. Durch die genannte Ausgestaltung ergeben sich plane Anlageflächen der endseitigen Windungsabschnitte, was wiederum günstig für einen flachen Aufbau der Feder ist aber auch der Anschlussbauteile, gegen die sich die Feder im Einbauzustand axial abstützt. Insbesondere lassen sich die Stützflächen zur Aufnahme des ersten beziehungsweise zweiten Windungsabschnitts als Radialflächen gestalten.

Zwischen dem ersten Windungsabschnitt und dem zweiten Windungsabschnitt ist vorzugsweise ein Steigungsabschnitt vorgesehen. Dieser erstreckt sich insbesondere um 45° bis 90° um die Federachse, wobei andere Werte nicht ausgeschlossen sind. Je kürzer der Steigungsabschnitt, desto größer können die jeweils in einer Ebene liegenden endseitigen Windungsabschnitte gestaltet sein, so dass hier eine gute und gleichmäßige Abstützung gegenüber einem Anschlussbauteil erreicht werden kann.

Eine Lösung der oben genannten Aufgabe besteht in einer Riemenspannvorrichtung für einen Riementrieb, wobei der Riementrieb zumindest ein Aggregat mit einem Gehäuse, mit einer Antriebswelle und mit einer Riemenscheibe, sowie einen endlosen Riemen zum Antreiben der Riemenscheibe aufweist, wobei die Riemenspannvorrichtung folgendes umfasst: einen Grundkörper mit einem Befestigungsabschnitt zum Verbinden des Grundkörpers mit dem Aggregat und mit einer Öffnung, in welche die Antriebswelle in montiertem Zustand zumindest teilweise eintaucht; zwei Spannarme, die an dem Grundkörper um eine Schwenkachse schwenkbar gelagert sind und über ein Federelement in Umfangsrichtung relativ zueinander abgestützt sind, wobei die Schwenkachse in montiertem Zustand innerhalb eines Außendurchmessers der Riemenscheibe des Aggregats angeordnet ist; je Spannarm eine Spannrolle zum Spannen des Riemens, wobei die Spannrollen jeweils an dem zugehörigen Spannarm um eine Drehachse drehbar gelagert sind; wobei das Federelement in Form einer gewundenen Feder gestaltet ist, die sich um die Schwenkachse herum erstreckt und mindestens 1,25 und maximal 2,5 Windungen aufweist.

Das Aggregat kann prinzipiell jede Maschine sein, die Teil des Riementriebes ist, das heißt insbesondere jedes der vom Hauptmotor des Kraftfahrzeugs angetriebenen Nebenaggregate. Insofern kann das Aggregat auch als Arbeitsmaschine bezeichnet werden. Insbesondere ist vorgesehen, dass das Aggregat in Form eines Generators gestaltet ist, mit dem die Riemenspannvorrichtung fest verbindbar ist. Es versteht sich jedoch, dass die erfindungsgemäße Riemenspannvorrichtung auch an jedem beliebigen anderen der Nebenaggregate des Riementriebs vorgesehen werden kann, wie beispielsweise an einer Wasserpumpe. Mit "fest verbindbar" ist eine Ausführungsform gemeint, bei der die Riemenspannvorrichtung als separate Baueinheit hergestellt und nachträglich mit der Arbeitsmaschine verbunden wird, beispielsweise mittels einer Schraubverbindung. Die Verbindung der Riemenspannvorrichtung kann beispielsweise auf einer Frontplatte des Aggregats oder einer anliegenden Baugruppe erfolgen. Bevorzugt wird die Riemenspannvorrichtung unmittelbar an das Aggregat beziehungsweise ein Gehäuseteil des Aggregats montiert.

Dadurch, dass die Riemenspannvorrichtung unmittelbar an das Aggregat montierbar ist, wird in vorteilhafter Weise eine sehr kompakte Konstruktion erreicht. Die Riemenspannvorrichtung kann insbesondere stirnseitig an dem Aggregat angeordnet werden, so dass kein gesonderter Bauraum im Motorraum zwischen Kurbelwelle und Aggregat zur Verfügung gestellt werden muss. Darüber hinaus sind keine weiteren Verbindungsmittel für die Riemenspannvorrichtung am Motorblock erforderlich. Insgesamt kann die Riemenspannvorrichtung unabhängig von den Bauraumverhältnissen im Motorraum ausgelegt werden. Dadurch, dass die Schwenkachse des Spannarms innerhalb des Außendurchmessers der Riemenscheibe angeordnet ist, liegt der Riemenspanner in Axialansicht innerhalb einer Einhüllenden des Aggregats, so dass auch der radiale Bauraum gering ist.

Aufgrund der zwei am Grundkörper gelagerten Spannarme hat die Riemenspannvorrichtung eine entkoppelnde Wirkung auf die am Aggregat auftretenden Drehschwankungen. Durch die federnde Abstützung der beiden Spannarme über die Feder sind die auf den Riemen einwirkenden Kräfte stets gleich groß. Die Spannarme können um den Grundkörper in Richtung des geringsten Energieniveaus schwenken beziehungsweise bewegen sich in die Position, in der Kräftegleichgewicht herrscht. Die sich aus den an den Spannrollen wirkenden Kräften ergebende Gesamtresultierende verläuft stets durch die Achse des Aggregats.

Die beiden Spannarme sind jeweils relativ zum Grundkörper um die Schwenkachse schwenkbar gelagert und in Umfangsrichtung mittels der gewundenen Feder gegeneinander abgestützt. Dabei werden die beiden Spannarme aufeinander zu beziehungsweise in Richtung Riemen beaufschlagt, um diesen zu spannen. Es ist vorgesehen, dass die gewundene Feder mindestens 1,25 und maximal 2,5 Windungen aufweist. Das heißt die gewundene Feder hat eine Umfangserstreckung von etwa 450° bis 900° um die Schwenkachse der Spannarme. Besonders bevorzugt ist eine Anzahl von 1,5 bis 2 Windungen, entsprechend einer Umfangserstreckung von etwa 540° bis 720°. Auch kann es je nach Einbausituation günstig sein, wenn die beiden Federenden einander zumindest etwa diametral gegenüberliegen, womit eine Windungszahl von etwa zwischen 1,4 und 1,6 umfasst sein soll, entsprechend einer Umfangserstreckung von etwa 500° bis 580°. Grundsätzlich kann jeder beliebige zwischen den mindestens 1,25 und maximal 2,5 Windungen genannte Wert verwendet werden und ist gemäß der Erfindung mit umfasst. Insbesondere versteht es sich, dass auch jede der vorzugsweise genannten Untergrenzen mit jeder der vorzugsweise genannten Obergrenzen kombinierbar ist. Die Enden der Feder können nach radial außen oder in axiale Richtung abgekröpft sein und stützen sich gegenüber entsprechenden Anschlägen am ersten und zweiten Spannarm in Drehrichtung ab.

Die gewundene Feder kann nach einer ersten Möglichkeit in Form einer Schraubenfeder gestaltet sein. In diesem Fall liegen die Windungen zumindest teilweise axial benachbart zueinander, beziehungsweise die Windungen haben zumindest teilweise eine Steigungskomponente in axialer Richtung. Nach einer zweiten Möglichkeit kann die Feder auch als Spiralfeder gestaltet sein, das heißt die Windungen haben eine Steigungskomponente in radialer Richtung. Hier liegen die Windungen im Wesentlichen in einer Ebene beziehungsweise, im Längsschnitt durch die Feder, zumindest teilweise radial benachbart zueinander. Eine weitere Möglichkeit kann in einer Kombination der ersten und zweiten Möglichkeit liegen, das heißt die gewundene Feder kann Windungsabschnitte nach Art einer Schraubenfeder und/oder nach Art einer Spiralfeder sowie Windungsabschnitte, welche sowohl Steigungskomponenten in Axial- wie in Radialrichtung haben. Eine so ausgestaltete Feder, welche auch als kombinierte Schrauben- und Spiralfeder bezeichnet werden kann, bietet den Vorteil einer besonders flachen Bauweise bei gleichzeitig guten Federeigenschaften.

Unabhängig von der konkreten Ausführungsform hat die gewundene Feder im Verhältnis zu ihrem Nenndurchmesser eine relativ geringe axiale Länge, das heißt der Durchmesser der Schraubenfeder ist verhältnismäßig groß. Besonders günstig für eine flachbauende Konstruktion ist es, wenn das Verhältnis von Durchmesser der gewundenen Feder zu axialer Länge, im Einbauzustand der Feder, größer als 3,0, insbesondere größer als 5,0, vorzugsweise größer als 7,0 ist. Hiermit wird ermöglicht, dass die Riemenspannvorrichtung stirnseitig an das Aggregat angebracht werden kann, ohne zusätzlichen Bauraum im Umfeld des Aggregats beziehungsweise zwischen Kurbelwelle und Aggregat zu beanspruchen. Eine Obergrenze für das Verhältnis von Durchmesser der Feder zu deren axialer Länge im Einbauzustand kann beispielsweise bei 9,0 oder darüber liegen, ohne hierauf beschränkt zu sein. Bei Verwendung einer gewundenen Feder mit spiralförmigen Abschnitt bezieht sich der genannte Durchmesser auf einen größten Durchmesser der Windungen der Feder. Es versteht sich, dass das genannte Verhältnis zwischen Durchmesser und axialer Länge der gewundenen Feder auch vom Drahtdurchmesser des Federdrahts abhängt. Je größer der Drahtdurchmesser, desto steifer ist die Feder, das heißt desto kleiner kann die axiale Länge beziehungsweise der Durchmesser der Feder ausgelegt sein, und umgekehrt.

Nach einer günstigen Ausgestaltung kann ferner vorgesehen sein, dass das Verhältnis eines größten Radius der gewundenen Feder zum Achsabstand zwischen der Drehachse zumindest einer der Spannrollen und der Schwenkachse der Spannarme kleiner als 1,5, insbesondere kleiner als 1,3 ist, vorzugsweise sogar kleiner 1,0 ist.

Hiermit wird in vorteilhafter Weise erreicht, dass die Feder auf einem relativ großen Radius an den Spannarmen angreifen kann, so dass eine gute Vorspannung der Spannarme an dem Riemen erzielt wird.

Nach einer bevorzugten Ausgestaltung ist der Grundkörper derart gestaltet, dass - in montiertem Zustand der Riemenspannvorrichtung an das Aggregat - die Schwenkachse der beiden Spannarme innerhalb des Außendurchmessers der Antriebswelle, insbesondere im Wesentlichen koaxial zur Antriebsdrehachse, angeordnet sind. Auf diese Weise ergeben sich eine besonders kompakte Konstruktion und eine günstige Lagerung. Die Öffnung des Grundkörpers weist einen kleinsten Innendurchmesser auf, der größer ist als ein größter Außendurchmesser der Riemenscheibe. Auf diese Weise kann die Riemenspannvorrichtung auch nachträglich, bei bereits montierter Antriebsscheibe, an dem Aggregat befestigt werden.

Vorzugsweise ist der Grundkörper als Stahlbauteil gestaltet, insbesondere als Blechumformteil. Hiermit wird in vorteilhafter Weise eine hohe Festigkeit und Steifigkeit bei niedrigem Materialeinsatz erreicht. Der Befestigungsabschnitt des Grundkörpers kann flanschartig von dem die Öffnung umgebenden Abschnitt, durch den die Antriebswelle geführt ist, abstehen. Günstig ist es, wenn der Befestigungsabschnitt mehrere Befestigungspunkte hat, an denen der Grundkörper mit dem Aggregat verbunden werden kann. Diese Befestigungspunkte können beispielsweise in Form von Flanscherweiterungen des Grundkörpers gestaltet sein, welche vom hülsenförmigen Abschnitt nach radial außen abstehen. Die genannten Befestigungsmittel liegen vorzugsweise zumindest in dem Umfangsbereich, der den Spannarmen und dem von der Riemenscheibe wegführenden Antriebsriemen etwa gegenüberliegen. Für eine zuverlässige Befestigung der Riemenspannvorrichtung an dem Aggregat ist es günstig, wenn die Befestigungsmittel in Axialansicht auf die Riemenscheibe über einen Umfangsabschnitt von mehr als 90° und weniger als 270°, insbesondere von etwa 150° bis 210° erstrecken.

Nach einer ersten Möglichkeit ist die Riemenspannvorrichtung so gestaltet, dass die Lagerung der Spannarme im Bereich zwischen dem Befestigungsabschnitt des Grundkörpers und der Riemenebene liegt. Dies gilt auch für die gewundene Feder, welche die Spannarme gegeneinander vorspannt, welche ebenfalls zwischen der Mittelebene des Riemens und dem Befestigungsabschnitt liegt. Die Riemenebene entspricht etwa der Lagermittelebene, welche durch die Lager der Spannrollen an den Spannarmen definiert ist. Eine zweite Lagermittelebene ist durch die Lager der Spannarme an dem Grundkörper gebildet.

Nach einer zweiten Möglichkeit ist die Riemenspannvorrichtung so gestaltet, dass die Lagerung der Spannarme am Grundkörper von dem Aggregat aus betrachtet hinter der Riemenebene liegt. Hiermit ist gemeint, dass eine Mittelebene der Spannarmlagerung gegenüber der Mittelebene des Riemens in Richtung Motorraum axial versetzt angeordnet ist. Die zweite Lagermittelebene und die Befestigungsmittel zum Befestigen des Grundkörpers sind bei dieser Möglichkeit auf unterschiedlichen Seiten der ersten Lagermittelebene der Spannrollen angeordnet.

Nach einer bevorzugten Ausgestaltung weist der erste Spannarm eine erste Stützfläche auf, gegen welche die Feder axial abgestützt ist, und der zweite Spannarm hat eine zweite Stützfläche, gegen welche die Feder axial abgestützt ist. So ist die gewundene Feder zwischen den beiden Spannarmen axial vorgespannt und fixiert. Die beiden Spannarme sind gegenüber dem Grundkörper jeweils über einen Winkelbereich von 360° um die Schwenkachse frei drehbar, womit eine gute Montierbarkeit erreicht wird.

Nach einer ersten Ausführungsform der Lagerung sind beide Spannarme jeweils auf dem Grundkörper radial und axial gelagert und dabei nebeneinander angeordnet. Nach einer zweiten Ausführungsform ist der erste Spannarm auf dem Grundkörper radial gelagert und der zweite Spannarm ist auf dem ersten Spannarm radial gelagert. Hiermit wird eine geschachtelte Lageranordnung erreicht. Die Feder ist vorzugsweise mit radialem Abstand um die Lagerabschnitte der ersten und zweiten Spannarme angeordnet und überdeckt mindestens einen der Lagerabschnitte zumindest teilweise in axiale Richtung. Ein größter Radius der gewundenen Feder ist vorzugsweise kleiner als der Radius der Befestigungspunkte des Grundkörpers zur Antriebsdrehachse und kleiner als der Achsabstand zwischen Spannrollenachse und Antriebsdrehachse.

Die Lösung der obengenannten Aufgabe besteht weiter in einer Aggregatanordnung für einen Riementrieb, umfassend ein Aggregat mit einem Gehäuse, einer Antriebswelle und einer Riemenscheibe, sowie eine Riemenspannvorrichtung, die nach einer oder mehrerer der obengenannten Ausführungsformen gestaltet ist, wobei der Grundkörper der Riemenspannvorrichtung mit dem Gehäuse des Aggregats fest verbunden ist, wobei die Antriebswelle in die Öffnung des Grundkörpers zumindest teilweise eintaucht. Hiermit werden die oben bereits genannten Vorteile eines kompakten Aufbaus bei Unabhängigkeit der Bauraumverhältnisse im Motorraum erreicht, weswegen in diesem Zusammenhang auf obige Beschreibung verwiesen wird. Das Aggregat ist vorzugsweise ein Generator, kann jedoch auch jedes andere der vom Hauptmotor angetriebenen Nebenaggregate beziehungsweise Arbeitsmaschinen sein, beispielsweise eine Pumpe. Die genannte Anordnung umfasst das Aggregat und die damit verbundene Riemenspannvorrichtung; insofern kann sie auch als Aggregat-Riemenspann-Anordnung bezeichnet werden.

Riemenspannvorrichtung und Aggregat sind als separate Baueinheiten gestaltet, die nachträglich über geeignete Verbindungsmittel miteinander verbunden werden, beispielsweise mittels Schraubverbindungen. Es ist jedoch nach einer nicht erfindungsgemäßen Ausführung grundsätzlich auch denkbar, dass Riemenspannvorrichtung und Aggregat gemeinsam eine Baueinheit bilden, wobei der Grundkörper der Riemenspannvorrichtung und das Gehäuse des Aggregats dann als integrales Bauteil zu gestalten wären. Im Übrigen könnte die Riemenspannvorrichtung jede der oben genannten Ausgestaltungen haben.

Bevorzugte Ausführungsbeispiele der Erfindung werden nachfolgend anhand der Zeichnungsfiguren erläutert. Hierin zeigt:
- Figur 1: eine erfindungsgemäße Feder in einer ersten Ausführungsform
a) in perspektivischer Ansicht;
b) in Axialansicht;
c) in Seitenachsicht
d) gemäß Schnittlinie I-I aus Figur 1b);

- Figur 2: eine erfindungsgemäße Riemenspannvorrichtung in einer ersten Ausführungsform
a) in perspektivischer Explosionsdarstellung;
b) in montiertem Zustand mit Antriebsriemenscheibe in perspektivischer Ansicht;
c) im Längsschnitt;
- Figur 3: eine erfindungsgemäße Anordnung mit einer erfindungsgemäßen Riemenspannvorrichtung gemäß Figur 2 in perspektivischer Ansicht;
- Figur 4: eine erfindungsgemäße Riemenspannvorrichtung in einer zweiten Ausführungsform im Längsschnitt mit einer erfindungsgemäßen Feder gemäß Figur 1;
- Figur 5: eine Lageranordnung für eine erfindungsgemäße Riemenspannvorrichtung als Einzelheit im Halblängsschnitt in abgewandelter Ausführung;
- Figur 6: eine Lageranordnung für eine erfindungsgemäße Riemenspannvorrichtung als Einzelheit im Halblängsschnitt in einer weiteren Ausführungsform;
- Figur 7: eine erfindungsgemäße Riemenspannvorrichtung in einer dritten Ausführungsform;
a) in perspektivischer Explosionsdarstellung
b) im Längsschnitt;
- Figur 8: eine erfindungsgemäße Anordnung mit einer erfindungsgemäßen Riemenspannvorrichtung gemäß Figur 7 in perspektivischer Ansicht.

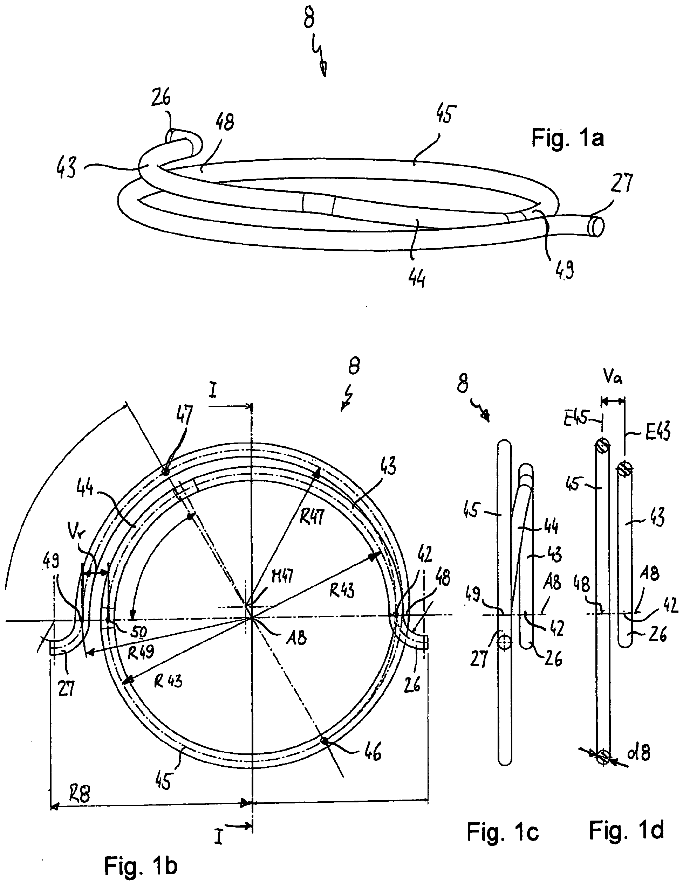

Die Figuren 1a) bis 1d), welche im Folgenden gemeinsam beschrieben werden, zeigen eine erfindungsgemäße Feder 8 in einer ersten Ausführungsform. Die Feder 8 hat etwa 1,5 Windungen, beziehungsweise erstreckt sich über etwa 540° um eine Federachse A8, wobei auch jede beliebige andere Anzahl von Windungen zwischen minimal 1,25 und maximal 2,5 (450° und 900°) denkbar ist. Ausgehend von einem nach radial außen abgebogenen ersten Endabschnitt 26 hat die Feder 8 einen ersten Windungsabschnitt 43, der sich in einer Ebene E43 mit gleichbleibendem Radius R43 über einen Winkelbereich von etwa 110° bis 120° um die Federachse A8 erstreckt. Mit Windungsabschnitt ist gemeint, dass die Feder in diesem Abschnitt um die Federachse mit konkaver Krümmung gewunden ist. Die Ebene E43, welche vom ersten Windungsabschnitt 43 aufgespannt wird, steht auf der Federachse A8 zumindest im Wesentlichen senkrecht, womit gewisse Fertigungs- und/oder Lagetoleranzen mit umfasst sein sollen. An den ersten Windungsabschnitt 43 ohne Steigung schließt sich ein Übergangs- oder Steigungsabschnitt 44 an, der sich über einen Winkelbereich von etwa 60° bis 70° erstreckt. In dem Steigungsabschnitt 44 verlässt die Feder 8 die Ebene E43, das heißt die Feder hat in diesem Abschnitt eine Steigungskomponente in axiale Richtung. Der Steigungsabschnitt 44 mündet in einen zweiten Windungsabschnitt 45, der in einer zur Ebene E43 parallelen Ebenen E45 liegt. Der zweite Windungsabschnitt 45 erstreckt sich vom Steigungsabschnitt 44 bis zum Ende des Windungsabschnitts 45 über etwa eine volle Windung, d. h. einen Winkelbereich von etwa 360°. Am Ende des zweiten Windungsabschnitts 45 schließt sich ein zweiter Endabschnitt 27 an, der nach radial außen abgebogen ist.

In Bezug auf die Federachse A8 hat die Feder 8 über den ersten Windungsabschnitt 43, den Steigungsabschnitt 44 und einen Teil des zweiten Windungsabschnitts 45 einen gleichbleibenden Radius R43. Der Kreisbogen mit Radius R43 erstreckt sich ausgehend vom Windungsende 42 bis zu einem ersten Übergangsbereich 46 des zweiten Windungsabschnitts 45. Von diesem ersten Übergangsbereich 46 bis zum zweiten Übergangsbereich 47 hat der zweite Windungsabschnitt 45 in Bezug auf die Federachse A8 einen spiralförmigen Verlauf, in dem die Feder 8 eine radiale Steigungskomponente aufweist und den ersten Radius R43 nach radial außen verlässt. Dies wird durch einen Radius R47 erreicht, dessen Mittelpunkt M47 gegenüber der Federachse A8 versetzt ist und der größer ist als der Radius R43. Vom zweiten Übergangsbereich 47 bis zum Windungsende 49 hat der zweite Windungsabschnitt 45 einen gleichbleibenden Radius R49 um die Federachse A8, der größer ist als der Radius R43 des ersten Windungsabschnitts 43. In Figur 1b) ist erkennbar, dass dieser Endbereich des zweiten Windungsabschnitts 45 koaxial zum Steigungsabschnitt 44 verläuft.

Es versteht sich, dass die angegebenen Winkelbereiche und Radienverläufe beispielhaft sind und insofern auch hiervon abweichende Winkelbereiche beziehungsweise Radien gewählt werden können. Wesentliche Konstruktionsmerkmale der Feder 8 sind, dass das erste Windungsende 42 gegenüber dem hierzu um 360° um die Federachse A8 versetzten Bereich 48 einen axialen Versatz Va aufweist, und dass das zweite Windungsende 49 gegenüber einem hierzu um 360° um die Federachse A8 versetzten Windungsbereich 50 einen radialen Abstand Vr aufweist. Mit um 360° versetzter Bereich ist dabei jeweils der vom zugehörigen Ende um genau eine Windung entfernt angeordnete Windungsbereich gemeint.

Dabei ist der axiale Versatz Va beziehungsweise der radiale Versatz Vr vorliegend kleiner als ein größter Durchmesser d8 des Federdrahts. Das erste Windungsende 42 hat gegenüber dem hierzu um 360° versetzten Windungsbereich 48 eine radiale Überdeckung, wodurch sich in diesem Umfangsbereich der Feder eine geringe Baugröße in radiale Richtung ergibt. Ferner hat das zweite Windungsende 49 gegenüber dem hierzu um 360° versetzten Bereich 50 eine axiale Überdeckung, wodurch sich in diesem Umfangsabschnitt ein besonders flacher Aufbau ergibt. Die beiden Windungsenden 42, 49 der Feder 8 sind relativ zueinander um etwa 180° in Umfangsrichtung versetzt, wobei gewisse Abweichungen von vorzugsweise bis zu ± 30° möglich sind.

Wesentliche Konstruktionsmerkmale der Feder 8 sind insbesondere, dass diese zumindest einen schraubenförmigen Teil mit gleichbleibendem Radius über dem Umfang (R43, R49) und zumindest einen spiralförmigen Teil mit in Bezug auf die Federachse A8 variablem Radius über dem Umfang (R47) hat, sowie zwei Windungsabschnitte 43, 45, die sich in zwei zueinander parallelen Ebenen E43, E45 erstrecken. Hierdurch ergibt sich ein besonders kompakter Aufbau der Feder 8 mit planen Anlageflächen.

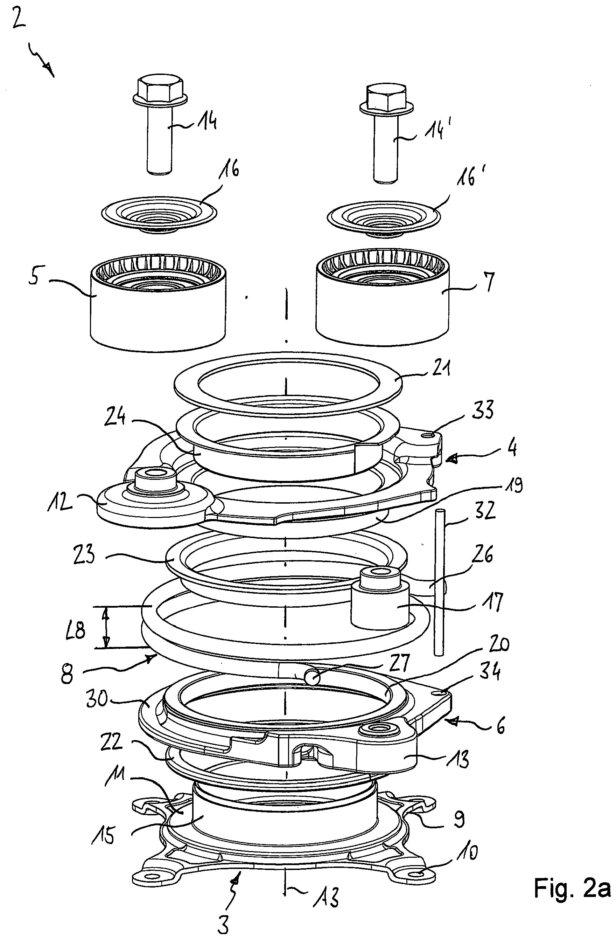

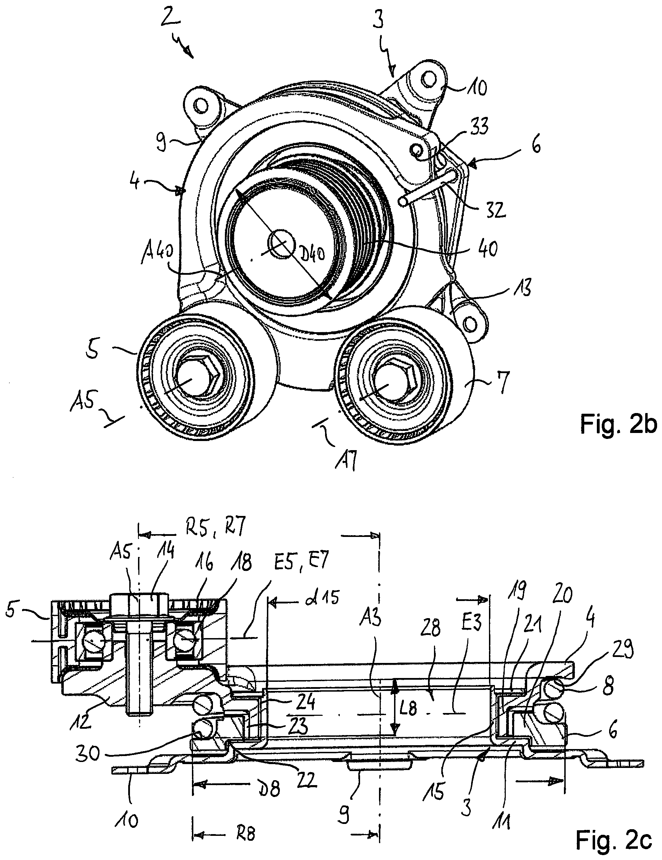

Die Figuren 2a), 2b) und 2c), welche im Folgenden gemeinsam beschrieben werden, zeigen eine erfindungsgemäße Riemenspannvorrichtung 2 in einer ersten Ausführungsform. Die Riemenspannvorrichtung 2 umfasst einen Grundkörper 3, einen ersten Spannarm 4 mit einer ersten Spannrolle 5, einen zweiten Spannarm 6 mit einer zweiten Spannrolle 7 und ein Federelement 8, welches die beiden Spannarme 4, 6 gegeneinander in Umfangsrichtung vorspannt. Das Federelement 8 kann wie in den Figuren 1a) bis 1d) gezeigt ausgeführt sein oder, wie vorliegend gezeigt, eine etwas abgewandelte Ausgestaltung haben.

Der Grundkörper 3 kann an einem Aggregat oder einem mit dem Aggregat verbundenen Bauteil befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem Aggregat hat der Grundkörper 3 einen Befestigungsabschnitt 9, insbesondere mit vier über den Umfang verteilten nach radial außen vorstehende Flanschvorsprüngen 10 mit Bohrungen, durch die Schrauben zur Befestigung an einem Aggregat durchgesteckt werden können. Die Riemenspannvorrichtung gemäß der vorliegenden Ausführungsform ist so gestaltet, dass die Lagerung der Spannarme 4, 6 zwischen dem Aggregat, beziehungsweise dem Befestigungsabschnitt 9 des Grundkörpers 3, und der mittleren Riemenebene liegt, die durch den Riemen in montiertem Zustand aufgespannt wird.

Der Grundkörper 3 hat ferner einen radial innen an den Befestigungsabschnitt 9 anschließenden Flanschabschnitt 11, der zur axialen Abstützung des zweiten Spannarms 6 dient. Der Flanschabschnitt 11 geht radial innen in einen Hülsenabschnitt 15 über, an dem der erste beziehungsweise zweite Spannarm 4, 6 radial gelagert ist. Am freien Ende des Hülsenabschnitts 15 ist eine Ringscheibe 21 als Abschluss fixiert. Dies erfolgt vorliegend durch Umbördeln eines endseitigen Randes des Hülsenabschnitts 15, wobei andere Befestigungsmethoden ebenso denkbar sind. Die Ringscheibe 21 bildet eine Stützfläche zur axialen Abstützung des ersten beziehungsweise zweiten Spannarms 4, 6. Insgesamt bilden die Ringscheibe 21, der Hülsenabschnitt 15 und der Flanschabschnitt 11 eine im Halblängsschnitt etwa C-förmige Aufnahme für die beiden Spannarme 4, 6. Der Grundkörper 3 ist vorliegend als Stahlbauteil ausgeführt, welcher umformend aus Blech hergestellt werden kann, wobei es sich versteht, dass auch andere Werkstoffe und Herstellungsverfahren in Frage kommen.

Die beiden Spannarme 4, 6 sind jeweils relativ zueinander um die Schwenkachse A3 schwenkbar, wobei das zwischen den beiden Spannarmen 4, 6 wirksam angeordnete Federelement 8 der Schwenkbewegung entgegenwirkt. Die aus den beiden Spannarmen 4, 6 und dem Federelement 8 zusammengesetzte Baueinheit ist gegenüber dem Grundkörper 3 um die Schwenkachse A3 frei drehbar, das heißt um 360° und mehr. Es ist vorgesehen, dass die Schwenkachse A3 in montiertem Zustand der Riemenspannvorrichtung 2 innerhalb des Durchmessers der Antriebsriemenscheibe 40 des Aggregats 35, vorzugsweise im Wesentlichen koaxial zur Antriebsachse A40 der Antriebsriemenscheibe liegt.

Die Spannarme 4, 6 haben jeweils einen Trägerabschnitt 12, 13, der von einem Ringabschnitt des jeweiligen Spannarms 4, 6 nach radial außen vorsteht. An dem Trägerabschnitt 12, 13 ist jeweils eine Spannrolle 5, 7 befestigt und mittels entsprechender Lager 18, 18' um zur Schwenkachse A3 parallele Drehachsen A5, A7 drehbar gelagert. Das Lager 18 für die erste Spannrolle 5 ist auf einen Zapfen des Trägerabschnitts 12 aufgezogen, in den eine Schraube 14 zur Befestigung eingeschraubt ist. Die zweite Spannrolle 7 ist auf einem Zwischenelement 17 drehbar gelagert, das mit dem zweiten Trägerabschnitt 13 mittels der Schraube 14' fixiert ist. Scheiben 16, 16' verhindern das Eindringen von Schmutz in die Lager 18, 18' der Spannrollen 5, 7.

Der erste Spannarm 4 hat radial innen einen Lagerabschnitt 19 zur drehbaren Lagerung an dem Grundkörper 3. Der zweite Spannarm 5 hat einen Lagerabschnitt 20 zur drehbaren Lagerung relativ zum ersten Lagerabschnitt 19 beziehungsweise zum Grundkörper 3. Es ist erkennbar, dass der erste Lagerabschnitt 19 und der zweite Lagerabschnitt 20 ineinander geschachtelt sind. Der zweite Lagerabschnitt 20 ist über ein Lager 22 gegenüber dem Grundkörper 3 axial abgestützt, das insbesondere in Form einer Lagerscheibe gestaltet ist, die in einer inneren Ausnehmung des zweiten Spannarms 6 aufgenommen und auf einer Ringschulter 11 des Grundkörpers 3 aufliegt. Zwischen dem ersten und zweiten Lagerabschnitt 19, 20 ist ein weiteres Lager 23 vorgesehen, das insbesondere in Form eines im Querschnitt L-förmigen Gleitrings gestaltet ist und eine axiale und radiale Lagerung zwischen den beiden Spannarmen 4, 6 bildet. Zur Abstützung in entgegengesetzter axialer Richtung ist ein drittes Lager 24 vorgesehen, das insbesondere in Form eines im Querschnitt L-förmigen Gleitrings gestaltet ist und eine axiale und radiale Lagerung für den ersten Spannarm 4 gegenüber dem Grundkörper 3 bildet. Das dritte Lager 24 ist axial gegenüber der Ringscheibe 21 abgestützt, welche durch Umbördeln des endseitigen Bundes des Hülsenabschnitts 15 fixiert wird, nachdem das erste Lager 22, der zweite Spannarm 6, das zweite Lager 23, der erste Spannarm 4 und das dritte Lager 24 auf den Grundkörper 3 montiert worden sind. Die Spannarme 4, 6 liegen dabei zumindest im Wesentlichen in einer Ebene mit den Lagerungen 23, 24, so dass der axiale Bauraum gering ist.

Die Feder 8 ist ein gewundenes Federelement, das sich im Einbauzustand in Umfangsrichtung um die Schwenkachse A3 herum erstreckt. Mit anderen Worten liegt die Federachse A8, welche beispielsweise durch die Summe der mittleren Durchmesser der Windungen definiert werden kann, zumindest im Wesentlichen koaxial zur Schwenkachse A3 des Grundkörpers 3. Mit im Wesentlichen koaxial ist gemeint, dass ein gewisser Versatz der Federachse A8 von der Schwenkachse A3 denkbar ist, insbesondere bei gewundenen Federelementen mit spiralförmigem Abschnitt. Die Feder 8 ist vorliegend in Form einer Schraubenfeder gestaltet, deren Windungszahl etwa zwischen 1,25 und 2,5 liegt (entsprechend 450° bis 900°). Ein erster Endabschnitt 26 der Feder 8 ist gegenüber dem ersten Spannarm 4 in Umfangsrichtung abgestützt und der zweite Endabschnitt 27 ist gegenüber dem zweiten Spannarm 6 in Umfangsrichtung abgestützt. Die beiden Endabschnitte 26, 27 sind jeweils nach radial außen abgebogen und in entsprechenden Aufnahmen der Spannarme 4, 6 verdrehsicher gehalten.

Die Feder 8 ist zwischen einer Stützfläche 29 des ersten Spannarms 4 und einer Stützfläche 30 des zweiten Spannarms 6 mit axialer Vorspannung eingesetzt. Somit ist die Feder 8 gegenüber den Spannarmen 4, 6 axial spielfrei gehalten, so dass die Entstehung von ungewünschten Geräuschen vermieden wird. Die Stützflächen 29, 30 der beiden Spannarme 4, 6 erstrecken sich in Umfangsrichtung und haben jeweils eine Rampenform, die an die Steigung der Schraubenfeder 8 angepasst ist.

Die Feder 8 steht im Einbauzustand unter starker Druckvorspannung in Umfangsrichtung, das heißt die Feder 8 ist gegenüber ihrem entspannten Zustand aufgeweitet, so dass die Feder 8 die beiden Spannarme 4, 6 in Richtung aufeinander zu beaufschlagt. Zum (vorübergehenden) Fixieren der vorgespannten Stellung werden die Spannarme 4, 6 entgegen der Vorspannkraft der Feder 8 voneinander weg bewegt und ein Sicherungsstift 32 in eine erste Bohrung 33 im ersten Spannarm 4 und eine zweite Bohrung 34 im zweiten Spannarm 6 eingesteckt. Nach dem Montieren der Riemenspannvorrichtung 2 an dem Aggregat 35 und Auflegen des Riemens 39 wird der Sicherungsstift 32 gezogen, so dass die Spannarme 4, 6 von der Feder 8 in Umfangsrichtung aufeinander zu beaufschlagt werden und die Spannrollen 5, 7 den Riemen 39 vorspannen.

Durch die geringe Anzahl von Windungen hat die Feder 8 eine kurze axiale Länge, was zu einer geringen axialen Baugröße der Riemenspannvorrichtung 2 führt. Besonders hervorzuheben ist das Verhältnis vom Durchmesser D8 der Feder 8 zur axialen Länge L8 der Feder 9 im Einbauzustand, welches vorliegend etwa 6,0 beträgt. Hiermit wird eine besonders kompakte Anordnung bei gleichzeitig guten Federeigenschaften erreicht. Es versteht sich, dass die Erfindung nicht auf dieses Verhältnis beschränkt ist. Vielmehr sind auch andere Werte möglich, wobei das Verhältnis von Durchmesser zur axialen Länge vorzugsweise in einem Bereich von größer 5,0, insbesondere größer 7,0 liegt. Die Wahl des Verhältnisses hängt unter anderem auch vom Drahtdurchmesser des Federdrahts ab, wobei gilt, dass mit zunehmendem Drahtdurchmesser die Steifigkeit der Feder zunimmt, und umgekehrt.

Es ist ferner erkennbar, dass ein größter Radius R8 der Schraubenfeder 8, welcher dem halben Durchmesser D8/2 entspricht, relativ groß im Verhältnis zum Achsabstand R5, R7 zwischen den Spannrollen-Drehachsen A5, A7 und der Schwenkachse A3 ist. Vorliegend beträgt das Verhältnis R5/R8 etwa 1,35, wobei es sich versteht, dass auch andere Werte denkbar sind. Vorzugsweise ist das Verhältnis von mittlerem Radius R8 der Feder 8 zum Achsabstand R5 kleiner als 1,5, insbesondere kleiner 1,3 oder sogar kleiner 1,0, und größer als 0,5, insbesondere größer 0,7. Hiermit können hohe Vorspannkräfte der Spannrollen 5, 7 an dem Riemen 39 erzielt werden.

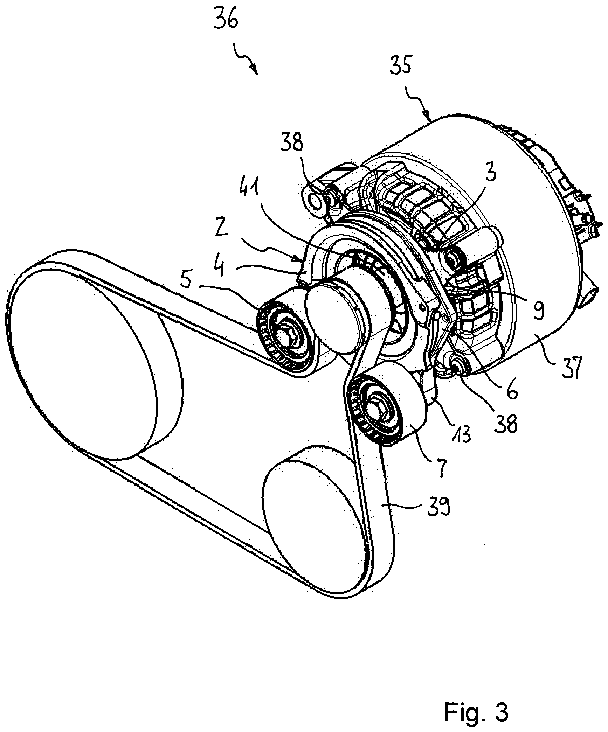

Figur 3 zeigt die erfindungsgemäße Riemenspannvorrichtung 2 gemäß den Figuren 2a) bis 2c) in montiertem Zustand an ein Aggregat 35. Dabei bilden die Riemenspannvorrichtung 2 und das Aggregat 35 gemeinsam eine Aggregatanordnung 36. Das Aggregat 35 ist vorliegend in Form eines Generators (Lichtmaschine) gestaltet. Es ist das Gehäuse 37 des Generators erkennbar, das über Befestigungsmittel an einem Motorblock angeschlossen werden kann. Es versteht sich jedoch, dass das Aggregat auch eine andere Arbeitsmaschine sein kann, die Teil des Riementriebes ist, beispielsweise ein Nebenaggregat, wie eine Pumpe.

Die Riemenspannvorrichtung 2 ist stirnseitig an dem Generator 35 angebracht. Dies erfolgt mittels der umfangsverteilten Anschlussflansche 10, in welche Schrauben 38 eingesteckt und mit dem Gehäuse 37 des Generators 35 verschraubt werden können. Es sind ferner der endlose Riemen 39 und die Riemenscheibe 40 erkennbar, die mittels einer Schraubverbindung auf der Antriebswelle 41 des Generators 35 drehfest verbunden werden kann.

Der Grundkörper 3 beziehungsweise die Riemenspannvorrichtung 2 ist derart gestaltet, dass - in montiertem Zustand der Riemenspannvorrichtung 2 an das Aggregat 35 - die Schwenkachse A3 der Spannarme 4, 6 innerhalb des Außendurchmessers der Antriebswelle, vorzugsweise im Wesentlichen koaxial zur Antriebsdrehachse, angeordnet ist.

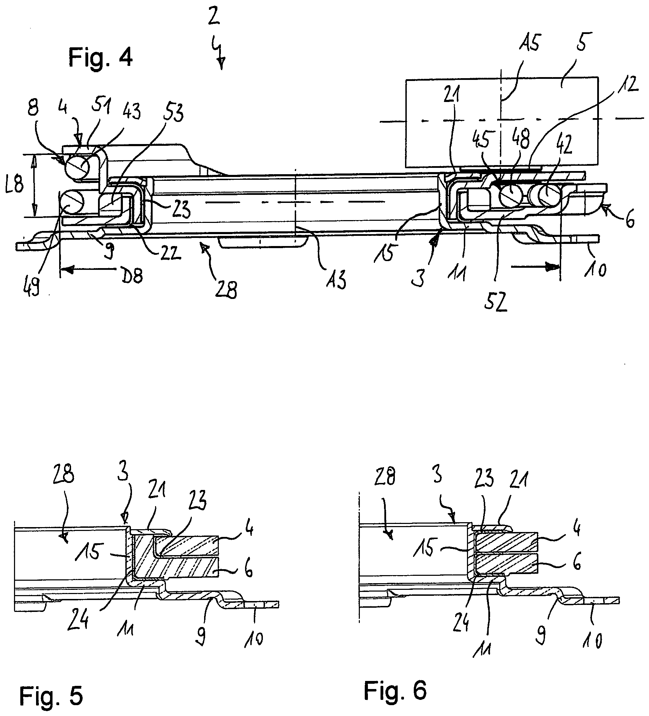

Figur 4 zeigt eine erfindungsgemäße Riemenspannvorrichtung 2 in einer weiteren Ausführungsform. Die vorliegende Riemenspannvorrichtung 2 entspricht weitestgehend der Ausführungsform gemäß den Figuren 2a) bis 2c), so dass hinsichtlich der Gemeinsamkeiten auf die obige Beschreibung Bezug genommen wird. Dabei sind gleiche beziehungsweise abgewandelte Bauteile mit gleichen Bezugszeichen versehen, wie in den Figuren 2a) bis 2c). Die Feder 8 der in Figur 4 gezeigten Ausführungsform entspricht der in den Figuren 1a) bis 1d) gezeigten Feder, so dass diesbezüglich auf die obige Beschreibung Bezug genommen wird; es sind gleiche Einzelheiten mit gleichen Bezugsweichen wie in Figur 1 versehen.

Eine Besonderheit der Ausführungsform gemäß Figur 4 ist, dass die Einbauposition der Feder 8 relativ zu den Spannarmen 4, 6 so gewählt ist, dass die beiden Träger 12, 13 beziehungsweise die daran befestigten Spannrollen 5, 7 der Spannarme 4, 6 in dem Umfangsbereich der Feder 8 angeordnet sind, in dem die Feder 8 den flachsten Aufbau hat. In diesem flachen Umfangsbereich hat die Feder 8 eine axiale Dicke die nur dem Durchmesser d8 des Federdrahts entspricht. Dieser flache Umfangsbereich, welcher durch einen Teil des zweiten Windungsabschnitts 45 gebildet ist, ist in der rechten Schnitthälfte von Figur 4 erkennbar. In dem gegenüberliegenden Umfangsbereich befindet sich der erste Windungsabschnitt 43, welcher relativ zum zweiten Windungsabschnitt 45 axial beabstandet ist, wie in der linken Schnitthälfte von Figur 4 erkennbar. Mit anderen Worten wird die für die Federwirkung erforderliche Windungsüberdeckung der Windungsabschnitte 43, 44, 45 in den Umfangsbereich gelegt, welcher den Spannrollen 5, 7 gegenüberliegt. Insgesamt hat die Riemenspannvorrichtung 2 durch diese Ausgestaltung eine besonders flache axiale Baugrö-ße.

Der konstruktive Ausgestaltung, insbesondere die Lagerung der Spannarme 4, 6 ist ähnlich der in den Figuren 2a) bis 2c) gezeigten Konstruktion. Eine Besonderheit der vorliegenden Ausführungsform gemäß Figur 4 besteht darin, dass die beiden Spannarme 4, 6 als Umformteile aus Blech hergestellt sind. Zwischen einem Flanschabschnitt 51 des ersten Spannarms 4 und einem hierzu axial beabstandeten Flanschabschnitt 52 des zweiten Spannarms 6 ist ein Ringraum gebildet, in dem die Feder 8 aufgenommen ist. Die beiden Spannarme 4, 6 werden über ein ringförmiges Distanzstück 53 gegeneinander axial abgestützt.

Figur 5 zeigt eine abgewandelte Ausführungsform für die Lagerung der Spannarme 4, 6 am Grundkörper 3 mit einer ineinander geschachtelten Spannarmen 4, 6. Hierfür hat der zweite Spannarm 6 im Halblängsschnitt ein L-förmiges Profil mit einem innenliegenden Hülsenabschnitt, der auf dem Grundkörper 3 unter Zwischenschaltung einer Lagerbuchse 24 drehbar gelagert ist, und einen hiervon abstehenden Flanschabschnitt. Der erste Spannarm 4 ist scheibenförmig gestaltet und auf dem zweiten Spannarm 6 unter Zwischenschaltung einer Lagerbuchse 23 drehbar gelagert. Die axiale Abstützung erfolgt über die mit dem Grundkörper 3 durch Umbördeln des Randes verbundene Scheibe 21.

Figur 6 zeigt eine weitere abgewandelte Ausführungsform für die Lagerung der Spannarme 4, 6 am Grundkörper 3 mit einer parallelen Anordnung. Hier sind die radial innenliegenden Lagerabschnitte der beiden Spannarme 4, 6 axial benachbart zueinander angeordnet und unter Zwischenschaltung von Lagerbuchsen 23, 24 beide auf dem hülsenförmigen Abschnitt 15 des Grundkörpers 3 drehbar gelagert.

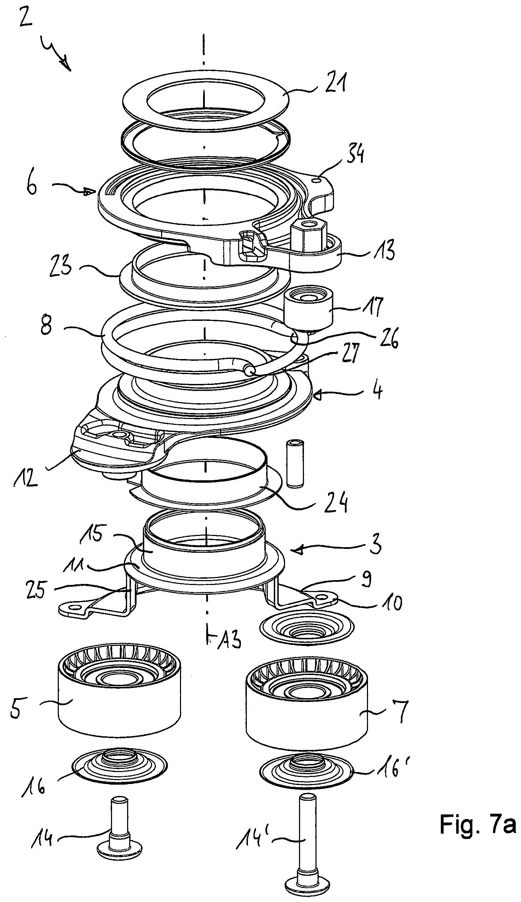

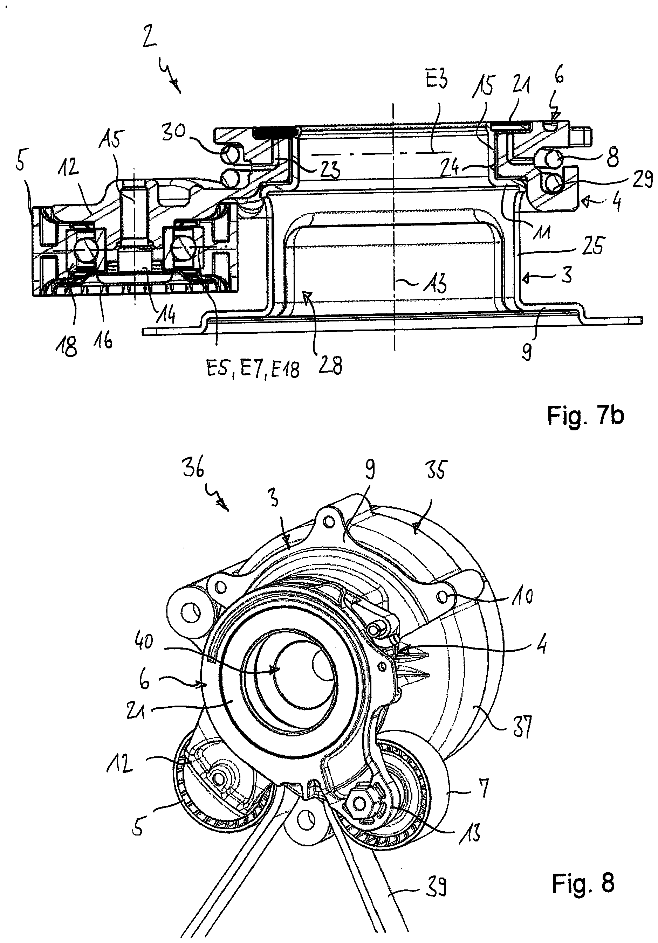

Die Figuren 7a) und 7b) zeigen eine erfindungsgemäße Riemenspannvorrichtung 2 in einer weiteren Ausführungsform. Diese entspricht in weiten Teilen der Ausführungsform gemäß den Figuren 2a) bis 2c), so dass hinsichtlich der Gemeinsamkeiten auf die obige Beschreibung Bezug genommen wird. Dabei sind gleiche beziehungsweise abgewandelte Bauteile mit gleichen Bezugsziffern versehen, wie bei der Ausführungsform gemäß den Figuren 2a) bis 2c). Im Folgenden werden hauptsächlich die Unterschiede der vorliegenden Ausführungsformen erläutert.

Bei der Ausführungsform gemäß den Figuren 7a) und 7b) ist die Riemenspannvorrichtung 2 so gestaltet, dass die Lagerung der Spannarme 4, 6 am Grundkörper 3 aus Sicht des Aggregats 35 hinter der Riemenebene liegt. Hiermit ist gemeint, dass eine Mittelebene E3 der Lagerung der Spannarme 4, 6 am Grundkörper 3 gegenüber einer Mittelebene E18 des Riemens 39 in Richtung Motorraum axial versetzt angeordnet ist. Als Riemenebene E18 ist die Ebene definiert, welche durch die Riemenmitte in montiertem Zustand aufgespannt wird. Die Lagerung der Spannarme 4, 6 ist wie bei der Ausführungsform nach Figur 2a) bis 2c) ausgeführt, mit dem Unterschied, dass die axiale Orientierung der Spannarme 4, 6 beziehungsweise der Lagerzapfen für die Spannrollen 5, 7 in Richtung auf das Aggregat 35 zu gerichtet sind. Der Grundkörper 3 hat einen verhältnismäßig langen Zwischenabschnitt 25, der die Öffnung 28 bildet, in welche die Antriebswelle beziehungsweise die Antriebsriemenscheibe 40 eintauchen kann.

Figur 8 zeigt die erfindungsgemäße Riemenspannvorrichtung 2 gemäß den Figuren 7a) und 7b) in montiertem Zustand an ein Aggregat 35. Dabei bilden die Riemenspannvorrichtung 2 und das Aggregat 35 gemeinsam die Aggregatanordnung 36. Bezüglich der Ausgestaltung des Aggregats beziehungsweise der Aggregatanordnung wird auf obige Beschreibung zur Figur 3 Bezug genommen, welche hier entsprechend gelten.

Die Besonderheit der vorliegenden Ausführungsform besteht darin, dass die Lagerung 23, 24 der Spannarme 4, 6 am Grundkörper 3, vom Generator aus betrachtet, hinter der Riemenebene liegt, welche im Wesentlichen der Lagermittelebene E18 der Spannrollenlager 18, 18' entspricht. Der Grundkörper 3 hat zwischen dem Befestigungsabschnitt 9 und dem hülsenförmigen Abschnitt 15 den sich in axiale Richtung erstreckenden Zwischenabschnitt 25. Die durch den Zwischenabschnitt 25 gebildete Öffnung 28 ist größer als der größte Außendurchmesser der Antriebsriemenscheibe 40. Insofern kann auch die Riemenspannvorrichtung gemäß der vorliegenden Ausführungsform bereits bei montierter Antriebsriemenscheibe an dem Aggregat befestigt werden. In montiertem Zustand taucht die Antriebswelle beziehungsweise die Antriebsriemenscheibe in die Öffnung 28 des Grundkörpers berührungsfrei ein, was im Übrigen auch für die obigen Ausführungsformen gilt. Eine ausreichende Luftzufuhr kann bei luftgekühlten Generatoren über eine Variation des Durchmessers der Öffnung 28 gewährleistet werden.

### Bezugszeichenliste

- 2: Riemenspannvorrichtung
- 3: Grundkörper
- 4: erster Spannarm
- 5: erste Spannrolle
- 6: zweiter Spannarm
- 7: zweite Spannrolle
- 8: Feder
- 9: Befestigungsabschnitt
- 10: Flanschvorsprung
- 11: Flanschabschnitt
- 12: Trägerabschnitt
- 13: Trägerabschnitt
- 14: Schraube
- 15: Abschnitt
- 16: Scheibe
- 17: Zwischenelement
- 18: Lager
- 19: Lagerabschnitt
- 20: Lagerabschnitt
- 21: Ringscheibe
- 22: Lager
- 23: Lager
- 24: Lager
- 25: Zwischenabschnitt
- 26: Federende
- 27: Federende
- 28: Öffnung
- 29: Stützfläche
- 30: Stützfläche
- 31 32: Sicherungsstift
- 33: Bohrung
- 34: Bohrung
- 35: Aggregat
- 36: Aggregatanordnung
- 37: Gehäuse
- 38: Schraube
- 39: Riemen
- 40: Riemenscheibe
- 41: Antriebswelle
- 42: erstes Windungsende
- 43: erster Windungsabschnitt
- 44: Steigungsabschnitt
- 45: zweiter Windungsabschnitt
- 46: Übergangsbereich
- 47: Übergangsbereich
- 48: erster Windungsbereich
- 49: zweites Windungsende
- 50: zweiter Windungsbereich
- 51: Flanschabschnitt
- 52: Flanschabschnitt

- A: Achse
- D, d: Durchmesser
- E: Ebene
- R: Radius
- V: Abstand

## Patentansprüche

1. Riemenspannvorrichtung für einen Riementrieb, wobei der Riementrieb zumindest ein Aggregat (35) mit einer Antriebswelle (41) und mit einer Riemenscheibe (40), sowie einen endlosen Riemen (39) zum Antreiben der Riemenscheibe (40) aufweist, die Riemenspannvorrichtung umfassend:
einen Grundkörper (3) mit Befestigungsmitteln (9) zum Verbinden des Grundkörpers (3) mit dem Aggregat (35) und mit einer Öffnung, in die die Antriebswelle (41) in montiertem Zustand zumindest teilweise eintaucht;
zwei Spannarme (4, 6), die an dem Grundkörper (3) um eine Schwenkachse (A3) schwenkbar gelagert sind und über eine Feder (8) in Umfangsrichtung relativ zueinander abgestützt sind, wobei die Schwenkachse (A3) in montiertem Zustand innerhalb eines Außendurchmessers der Riemenscheibe (40) des Aggregats (35) angeordnet ist;
je Spannarm (4, 6) eine Spannrolle (5, 7) zum Spannen des Riemens (39), wobei die Spannrollen (5, 7) jeweils an dem zugehörigen Spannarm (4, 6) um eine jeweilige Drehachse (A5, A7) drehbar gelagert sind;
**dadurch gekennzeichnet, dass** die Feder (8) sich um die Schwenkachse (A3) herum erstreckt und mindestens 1,25 und maximal 2,5 Windungen aufweist.

2. Riemenspannvorrichtung nach Anspruch 1,
**dadurch gekennzeichnet,**
**dass** das Verhältnis von einem größten Durchmesser (D8) zu einer größten axialen Länge (L8) der Feder (8) im Einbauzustand größer als 5,0, insbesondere größer als 7,0 ist.

3. Riemenspannvorrichtung nach Anspruch 1 oder 2,
**dadurch gekennzeichnet,**
**dass** das Verhältnis von einem größten Radius (R8) der Feder (8) zum Achsabstand zwischen der Drehachse (A5, A7) zumindest einer der Spannrollen (5, 7) und der Schwenkachse (A3) der Spannarme (4, 6) kleiner als 1,5, insbesondere kleiner als 1,3 ist.

4. Riemenspannvorrichtung nach einem der Ansprüche 1 bis 3,
**dadurch gekennzeichnet,**
**dass** ein erstes Windungsende (42) der Feder (8) gegenüber einem hierzu um 360° um die Federachse (A8) versetzten ersten Windungsbereich (48) einen axialen Versatz (Va) aufweist, und
**dass** ein zweites Windungsende (49) der Feder (8) gegenüber einem hierzu um 360° um die Federachse (A8) versetzten zweiten Windungsbereich (50) einen radialen Versatz (Vr) aufweist.

5. Riemenspannvorrichtung nach Anspruch 4,
**dadurch gekennzeichnet,**
**dass** das erste Windungsende (42) gegenüber dem ersten Windungsbereich (48) einen axialen Abstand aufweist, der kleiner ist als ein dreifacher Durchmesser (d8) des Federdrahts, und/oder
**dass** das zweite Windungsende (49) gegenüber dem zweiten Windungsbereich (50) einen radialen Abstand aufweist, der kleiner ist als ein dreifacher Durchmesser (d8) des Federdrahts.

6. Riemenspannvorrichtung nach Anspruch 4 oder 5,
**dadurch gekennzeichnet,**
**dass** das erste Windungsende (42) gegenüber dem ersten Windungsbereich (48) eine radiale Überdeckung aufweist, und/oder
**dass** das zweite Windungsende (49) gegenüber dem zweiten Windungsbereich (50) eine axiale Überdeckung aufweist.

7. Riemenspannvorrichtung nach einem der Ansprüche 4 bis 6,
**dadurch gekennzeichnet,**
**dass** ein sich vom ersten Windungsende (42) aus erstreckender erster Windungsabschnitt (43) in einer ersten Ebene (E43) liegt, und/oder
**dass** ein sich vom zweiten Windungsende (49) aus erstreckender zweiter Windungsabschnitt (45) in einer zweiten Ebene (E45) liegt.

8. Riemenspannvorrichtung nach einem der Ansprüche 4 bis 7,
**dadurch gekennzeichnet,**
**dass** zwischen dem ersten Windungsabschnitt (43) und dem zweiten Windungsabschnitt (45) ein Steigungsabschnitt (44) vorgesehen ist, der sich insbesondere um 45° bis 90° um die Federachse (A8) erstreckt.

9. Riemenspannvorrichtung nach einem der Ansprüche 1 bis 8,
**dadurch gekennzeichnet,**
**dass** die Feder (8) zwischen dem ersten Spannarm (4) und dem zweiten Spannarm (6) mit Druckvorspannung in axialer Richtung und/oder mit Druckvorspannung in Umfangsrichtung einsitzt.

10. Riemenspannvorrichtung nach einem der Ansprüche 1 bis 9,
**dadurch gekennzeichnet,**
**dass** der Grundkörper (3) ein Stahlbauteil ist, insbesondere ein Blechumformteil.

11. Riemenspannvorrichtung nach einem der Ansprüche 1 bis 10,
**dadurch gekennzeichnet,**
**dass** ein hülsenförmiger Abschnitt (15) des Grundkörpers (3) einen kleinsten Innendurchmesser (d15) aufweist, der größer ist als ein größter Außendurchmesser (D40) der Riemenscheibe (40).

12. Riemenspannvorrichtung nach einem der Ansprüche 1 bis 11,
**dadurch gekennzeichnet,**
**dass** der erste und der zweite Spannarm (4, 6) gegenüber dem Grundkörper (3) jeweils über einen Winkelbereich von mindestens 360° um die Schwenkachse (A3) frei drehbar sind.

13. Riemenspannvorrichtung nach einem der Ansprüche 1 bis 12,
**dadurch gekennzeichnet,**
**dass** eine erste Lagermittelebene (E5) durch Lager (18) der Spannrollen (5, 7) an den Spannarmen (4, 6) gebildet ist,
**dass** eine zweite Lagermittelebene (E3) durch Lager (24) der Spannarme (4, 6) an dem Grundkörper (3) gebildet ist,
wobei die erste Lagermittelebene (E5) und die Befestigungsmittel (9) des Grundkörpers (3) auf unterschiedlichen Seiten der zweiten Lagermittelebene (E3) angeordnet sind, oder
wobei die zweite Lagermittelebene (E3) und die Befestigungsmittel (9) des Grundkörpers (3) auf unterschiedlichen Seiten der ersten Lagermittelebene (E5) angeordnet sind.

14. Aggregatanordnung für einen Riementrieb, umfassend ein Aggregat (35) mit einem Gehäuse (37), einer Antriebswelle (41) und einer Riemenscheibe (40), sowie eine Riemenspannvorrichtung (2) nach einem der Ansprüche 1 bis 13, **dadurch gekennzeichnet, dass** der Grundkörper (3) der Riemenspannvorrichtung (2) mit dem Gehäuse (37) des Aggregats (35) fest verbunden oder fest verbindbar ist, wobei die Antriebswelle (41) in die Öffnung (28) des Grundkörpers (3) zumindest teilweise eintaucht.

## Claims

1. Belt tensioning device for a belt drive, wherein the belt drive has at least one unit (35) with a drive shaft (41) and with a belt pulley (40), as well as an endless belt (39) for driving the belt pulley (40), the belt tensioning device comprising:
a base member (3) with attaching means (9) for connecting the base member (3) to the unit (35) and with an opening into which the drive shaft (41) extends at least partially in the assembled state;
two tensioning arms (4, 6), which are mounted on the base member (3) so as to be pivotable about a pivot axis (A3) and are supported relative to each other in the circumferential direction via a spring (8), wherein the pivot axis (A3) is arranged within an outer diameter of the belt pulley (40) of the unit (35) in the assembled state;
a tensioning roller (5, 7) per tensioning arm (4, 6) for tensioning the belt (39), wherein the tensioning rollers (5, 7) are respectively mounted on the associated tensioning arm (4, 6) so as to be rotatable about a respective axis of rotation (A5, A7);
**characterised in that** the spring (8) extends around the pivot axis (A3) and has at least 1.25 and at most 2.5 windings.

2. Belt tensioning device according to claim 1,
**characterised in**
**that** the ratio of a maximum diameter (D8) to a maximum axial length (L8) of the spring (8) in the installed state is greater than 5.0, in particular greater than 7.0.

3. Belt tensioning device according to claim 1 or 2,
**characterised in**
**that** the ratio of a largest radius (R8) of the spring (8) to the axis distance between the axis of rotation (A5, A7) of at least one of the tensioning rollers (5, 7) and the pivot axis (A3) of the tensioning arms (4, 6) is less than 1.5, in particular less than 1.3.

4. Belt tensioning device according to any one of claims 1 to 3, **characterised in**
**that** a first winding end (42) of the spring (8) has an axial offset (Va) relative to a first winding region (48) offset therefrom by 360° about the spring axis (A8), and
in that a second winding end (49) of the spring (8) has a radial offset (Vr) relative to a second winding region (50) offset therefrom by 360° about the spring axis (A8).

5. Belt tensioning device according to claim 4,
**characterised in**
**that** the first winding end (42) has an axial distance from the first winding region (48) which is smaller than three times the diameter (d8) of the spring wire, and/or
**that** the second winding end (49) has a radial distance from the second winding region (50) which is smaller than three times the diameter (d8) of the spring wire.

6. Belt tensioning device according to claim 4 or 5,
**characterised in**
**that** the first winding end (42) has a radial overlap with respect to the first winding region (48), and/or
**that** the second winding end (49) has an axial overlap with respect to the second winding region (50).

7. Belt tensioning device according to any one of claims 4 to 6, **characterised in**
**that** a first winding section (43) extending from the first winding end (42) lies in a first plane (E43), and/or
**that** a second winding section (45) extending from the second winding end (49) lies in a second plane (E45).

8. Belt tensioning device according to any one of claims 4 to 7, **characterised in**
**that** an incline section (44) is provided between the first winding section (43) and the second winding section (45), which in particular extends by 45° to 90° around the spring axis (A8).

9. Belt tensioning device according to any one of claims 1 to 8, **characterised in**
**that** the spring (8) is arranged between the first tensioning arm (4) and the second tensioning arm (6) with compressive preload in the axial direction and/or with compressive preload in the circumferential direction.

10. Belt tensioning device according to any one of claims 1 to 9, **characterised in**
**that** the base member (3) is a steel component, in particular a sheet metal formed part.

11. Belt tensioning device according to any one of claims 1 to 10, **characterised in**
**that** a sleeve-shaped portion (15) of the base member (3) has a smallest inside diameter (d15) which is larger than a largest outside diameter (D40) of the belt pulley (40).

12. Belt tensioning device according to any one of claims 1 to 11, **characterised in**
**that** the first and second tensioning arms (4, 6) are each freely rotatable relative to the base member (3) over an angular range of at least 360° about the pivot axis (A3).

13. Belt tensioning device according to any one of claims 1 to 12, **characterised in**
**that** a first bearing centre plane (E5) is formed by bearings (18) of the tensioning rollers (5, 7) on the tensioning arms (4, 6),
**that** a second bearing centre plane (E3) is formed by bearings (24) of the tensioning arms (4, 6) on the base member (3),
wherein the first bearing centre plane (E5) and the attaching means (9) of the base member (3) are arranged on different sides of the second bearing centre plane (E3), or
wherein the second bearing centre plane (E3) and the attaching means (9) of the base member (3) are arranged on different sides of the first bearing centre plane (E5).

14. Assembly for a belt drive, comprising a unit (35) with a housing (37), a drive shaft (41) and a belt pulley (40), as well as a belt tensioning device (2) according to one of claims 1 to 13,
**characterised in that** the base member (3) of the belt tensioning device (2) is firmly connected or firmly connectable to the housing (37) of the unit (35), wherein the drive shaft (41) at least partially extends into the opening (28) of the base member (3).

## Revendications

1. Dispositif de tension de courroie pour une transmission par courroie, la transmission par courroie présentant au moins une unité (35) avec un arbre d'entrainement (41) et avec une poulie (40), et une courroie sans fin (39) pour entrainer la poulie (40), le dispositif de tension de courroie comprenant :
un corps de base (3) avec des moyens de fixation (9) pour relier le corps de base (3) à l'unité (35) et avec une ouverture dans laquelle l'arbre d'entraînement (41) s'enfonce au moins partiellement à l'état monté ;
deux bras tendeurs (4, 6) qui sont montés sur le corps de base (3) de manière à pouvoir pivoter autour d'un axe de pivotement (A3) et qui sont soutenus l'un par rapport à l'autre dans la direction périphérique par l'intermédiaire d'un ressort (8), l'axe de pivotement (A3) étant disposé, à l'état monté, à l'intérieur d'un diamètre extérieur de la poulie (40) de l'unité (35) ;
pour chaque bras tendeur (4, 6), un galet tendeur (5, 7) pour tendre la courroie (39), les galets tendeurs (5, 7) étant montés chacun sur le bras tendeur (4, 6) correspondant de manière à pouvoir tourner autour d'un axe de rotation (A5, A7) respectif ;
**caractérisé en ce que** le ressort (8) s'étend autour de l'axe de pivotement (A3) et comporte au moins 1,25 et au maximum 2,5 spires.

2. Dispositif de tension de courroie selon la revendication 1,
**caractérisé en ce**
**que** le rapport entre un plus grand diamètre (D8) et une plus grande longueur axiale (L8) du ressort (8) à l'état monté est supérieur à 5,0, en particulier supérieur à 7,0.

3. Dispositif de tension de courroie selon la revendication 1 ou 2,
**caractérisé en ce**
**que** le rapport entre un plus grand rayon (R8) du ressort (8) et l'entraxe entre l'axe de rotation (A5, A7) d'au moins un des galets tendeurs (5, 7) et l'axe de pivotement (A3) des bras tendeurs (4, 6) est inférieur à 1,5, en particulier inférieur à 1,3.

4. Dispositif de tension de courroie selon l'une quelconque des revendications 1 à 3,
**caractérisé en ce**
**qu'**une première extrémité de spire (42) du ressort (8) présente un décalage axial (Va) par rapport à une première zone de spire (48) décalée à cet effet de 360° autour de l'axe de ressort (A8), et
**qu'**une deuxième extrémité de spire (49) du ressort (8) présente un décalage radial (Vr) par rapport à une deuxième zone de spire (50) décalée à cet effet de 360° autour de l'axe du ressort (A8).

5. Dispositif de tension de courroie selon la revendication 4,
**caractérisé en ce**
**que** la première extrémité de spire (42) présente, par rapport à la première zone de spire (48), une distance axiale qui est inférieure à trois fois le diamètre (d8) du fil élastique, et/ou
**que** la deuxième extrémité de spire (49) présente, par rapport à la deuxième zone de spire (50), une distance radiale qui est inférieure à trois fois le diamètre (d8) du fil de ressort.

6. Dispositif de tension de courroie selon la revendication 4 ou 5,
**caractérisé en ce**
**que** la première extrémité de spire (42) présente un recouvrement radial par rapport à la première zone de spire (48), et/ou
**que** la deuxième extrémité de spire (49) présente un recouvrement axial par rapport à la deuxième zone de spire (50).

7. Dispositif de tension de courroie selon l'une quelconque des revendications 4 à 6,
**caractérisé en ce**
**qu'**une première section de spire (43) s'étendant depuis la première extrémité de spire (42) se trouve dans un premier plan (E43), et/ou
**qu'**une deuxième section de spire (45) s'étendant depuis la deuxième extrémité de spire (49) se trouve dans un deuxième plan (E45).

8. Dispositif de tension de courroie selon l'une quelconque des revendications 4 à 7,
**caractérisé en ce**
**qu'**il est prévu entre la premier section de spire (43) et la deuxième section de spire (45) une section de pente (44) qui s'étend en particulier de 45° à 90° autour de l'axe de ressort (A8).

9. Dispositif de tension de courroie selon l'une quelconque des revendications 1 à 8,
**caractérisé en ce**
**que** le ressort (8) s'insère entre le premier bras tendeur (4) et le deuxième bras tendeur (6) avec une précontrainte de compression dans la direction axiale et/ou avec une précontrainte de compression dans la direction périphérique.

10. Dispositif de tension de courroie selon l'une quelconque des revendications 1 à 9,
**caractérisé en ce**
**que** le corps de base (3) est une pièce en acier, en particulier une pièce en tôle déformée.

11. Dispositif de tension de courroie selon l'une quelconque des revendications 1 à 10,
**caractérisé en ce**
**qu'**une section en forme de douille (15) du corps de base (3) présente un plus petit diamètre intérieur (d15) qui est supérieur à un plus grand diamètre extérieur (D40) de la poulie (40).

12. Dispositif de tension de courroie selon l'une quelconque des revendications 1 à 11,
**caractérisé en ce**
**que** le premier et le deuxième bras tendeurs (4, 6) peuvent tourner librement par rapport au corps de base (3) respectivement sur une plage angulaire d'au moins 360° autour de l'axe de pivotement (A3).

13. Dispositif de tension de courroie selon l'une quelconque des revendications 1 à 12,
**caractérisé en ce**
**qu'**un premier plan médian de palier (E5) est formé par des paliers (18) des galets tendeurs (5, 7) sur les bras tendeurs (4, 6),
**qu'**un deuxième plan médian de palier (E3) est formé par des paliers (24) des bras tendeurs (4, 6) sur le corps de base (3),
le premier plan médian de palier (E5) et les moyens de fixation (9) du corps de base (3) étant disposés sur des côtés différents du deuxième plan médian de palier (E3), ou
le deuxième plan médian de palier (E3) et les moyens de fixation (9) du corps de base (3) étant disposés sur des côtés différents du premier plan médian de palier (E5).

14. Agencement pour une transmission par courroie, comprenant une unité (35) avec un boîtier (37), un arbre d'entraînement (41) et une poulie (40), ainsi qu'un dispositif de tension de courroie (2) selon l'une quelconque des revendications 1 à 13,
**caractérisé en ce que** le corps de base (3) du tendeur de courroie (2) est relié ou peut être relié solidement au boîtier (37) de l'unité (35), l'arbre d'entraînement (41) s'étendant au moins partiellement dans l'ouverture (28) du corps de base (3).
